# EUROPEAN PATENT SPECIFICATION

(11) **EP 4 249 682 B1**
(45) Date of publication and mention of the grant of the patent: **16.04.2025**
(21) Application number: 23164061.6
(22) Date of filing: 24.03.2023
(51) Int. Cl.: E01H 1/12

(54) **A PET LITTER PICKUP DEVICE**
HAUSTIERABFALLAUFNAHMEVORRICHTUNG
DISPOSITIF DE RAMASSAGE DE LITIÈRE POUR ANIMAUX DOMESTIQUES

(30) Priority: 25.03.2022 GB 202204292
(43) Date of publication of application: 27.09.2023
(73) Proprietor: Radut, Iulian, London HA3 9PB (GB)
(72) Inventor: Radut, Iulian, London HA3 9PB (GB)
(74) Representative: Appleyard Lees IP LLP

(56) References cited:
- CN-U- 205 421 136
- CN-U- 209 873 672
- US-A1- 2011 197 825
- US-B1- 7 992 907

## Description

### Field of the invention

The present invention generally relates to a pet litter pickup device , in particular a device for picking up faeces, more particularly but not exclusively dog faeces.

### Background

Many people in many societies enjoy keeping , raising and caring for pet animals, such as dogs. However, it has become necessary to clean up after their pets, in particular this means removal and disposal elsewhere of faeces from their animal and it can be problematic and unpleasant to collect and dispose.

Some devices have been developed to make such tasks easier, but they have shortcomings. The present invention arose in order to overcome problems suffered by existing devices.

The present invention arose in order to overcome problems suffered by existing devices.

US7992907B1 relates to an animal excrement collector device including a handle having a first internal cavity; a spring-loaded extension assembly disposed therein, that extends an extension rod from the handle upon activation of an extension button disposed on the handle; a trigger-lock mechanism, which is continuously disposed within the first internal cavity and an extension rod second internal cavity, includes a trigger grip member that activates a trigger button which, in turn, extends first and second cables that extend claw members hingedly attached to the second cables, which, in turn, expand a waste collection bag attached thereto. The claw members retract to pick up an object, such as animal excrement, and scoop the object into the waste collection bag for containment. The used waste collection bag may be hung from a J-hook disposed on a handle lower end. A bag dispenser disposed within the second internal cavity holds unused bags.

### SUMMARY OF THE INVENTION

According to a first aspect of the present invention, there is provided a pet litter pickup device comprising: a first proximate end and a hand grip at the first proximate end, a second distal end and a picker at the second distal end, the picker having three or more arms; and telescopic members, the telescopic members being arranged to extend from a first retracted transport length to a second usage length and/or a third usage length longer than the second usage length, the hand grip comprising a picking mechanism, wherein: the picking mechanism is arranged to control movement of the three or more arms; the picking mechanism is activated by a trigger; and the picking mechanism is designed to function by being arranged to control movement of the three or more arms from a first open position to a second closed position in any of the first retracted transport length, the second usage length and/or the third usage length of the telescopic members, wherein: the picking mechanism comprises a spring loaded pulley and a ball chain that is wrapped around the spring loaded pulley to keep the ball chain under tension no matter the telescoped position; and the trigger is configured to pull the ball chain when pulled on to open the three or more arms to the first open position, wherein the trigger is configured to only engage with the ball chain when pulled on, and to allow the chain to pass freely through when the trigger is not pulled, the three or more arms defining an internal volume in the second closed position adapted for receiving a pet faeces, and the three or more arms including catches adapted to catch and hold a top elastic litter bag within the internal volume in the second closed position and the first open position.

In some embodiments according to the first aspect, the pet litter pickup device comprises four arms.

In some embodiments according to the first aspect, the catches comprise reversed hooks.

In some embodiments according to the first aspect, the catches are located towards the distal side of the three or more arms from the internal volume.

In some embodiments according to the first aspect, the pet litter pickup device comprises a member locking collar or a member locking mechanism configured to lock a length extension of the telescopic members at the first retracted transport length, the second usage length, and/or the third usage length.

In some embodiments according to the first aspect, the pet litter pickup device comprises the member locking mechanism configured to lock the length extension of the telescopic members, wherein the member locking mechanism is a spring-loaded pin mechanism configured on the telescopic members such that a centre region of the telescopic members is unoccupied by the member locking mechanism.

In some embodiments according to the first aspect, the member locking mechanism comprises: a flat spring lock element, the flat spring lock element comprising: a flat spring plate; and a spring-loaded pin provided towards a pin end of the flat spring plate, wherein: the flat spring plate is fixed towards a fixing end, opposite to the pin end, to a first one of the telescopic members such that a centre region within the telescopic members is unoccupied by the flat spring lock element; and the member locking mechanism further comprises: an orifice, the orifice being provided on a second one of the telescopic members, the orifice being configured to receive the spring-loaded pin.

In some embodiments according to the first aspect, the hand grip comprises the trigger for the picking mechanism.

In some embodiments according to the first aspect, the pet litter pickup device comprises a light source.

In some embodiments according to the first aspect, the pet litter pickup device comprises a bag holder.

In some embodiments according to the first aspect, the catches are adapted to catch and hold an elastic top of the top elastic litter bag when the elastic top rests against the catches.

According to a second aspect of the present invention, there is provided an apparatus comprising the pet litter pickup device according to the first aspect, and a handle comprising a lead, the apparatus further comprising a connection mechanism for connecting the pet litter pickup device to the handle.

In some embodiments according to the second aspect, the handle comprises a retractable lead.

In some embodiments according to the second aspect, the handle comprises a lanyard attachment point.

In some embodiments according to the second aspect, the connection mechanism comprises a dock on the handle.

### BRIEF DESCRIPTION OF FIGURES

Examples of the present disclosure will now be described with reference to the accompanying drawings, in which:
Figure 1 shows an isometric view of an embodiment of the device according to the first aspect of the present invention with picker in the first position and elongate member in the second position, incorporated in apparatus according to the second aspect of the present invention

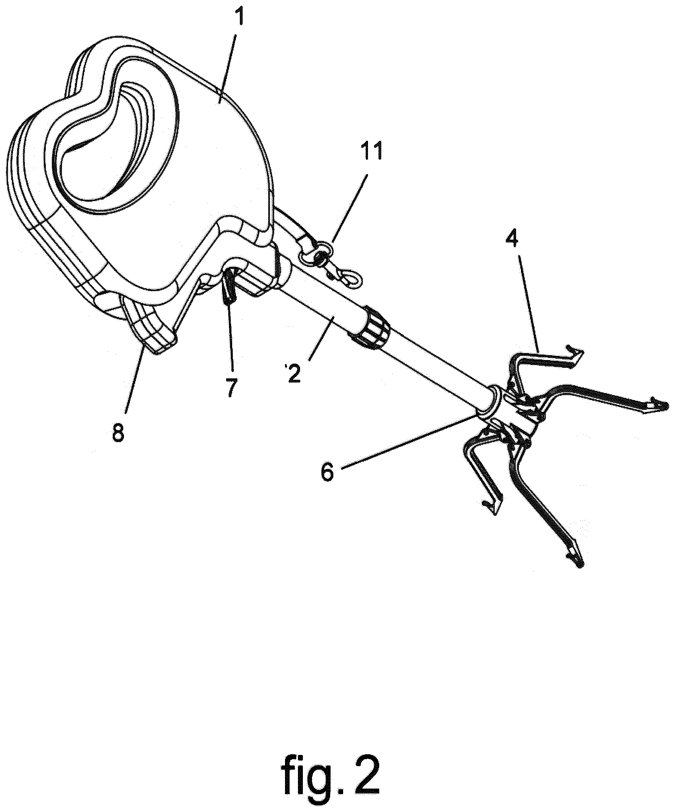

Figure 2 shows a reverse isometric view of the apparatus as shown in Figure 1;

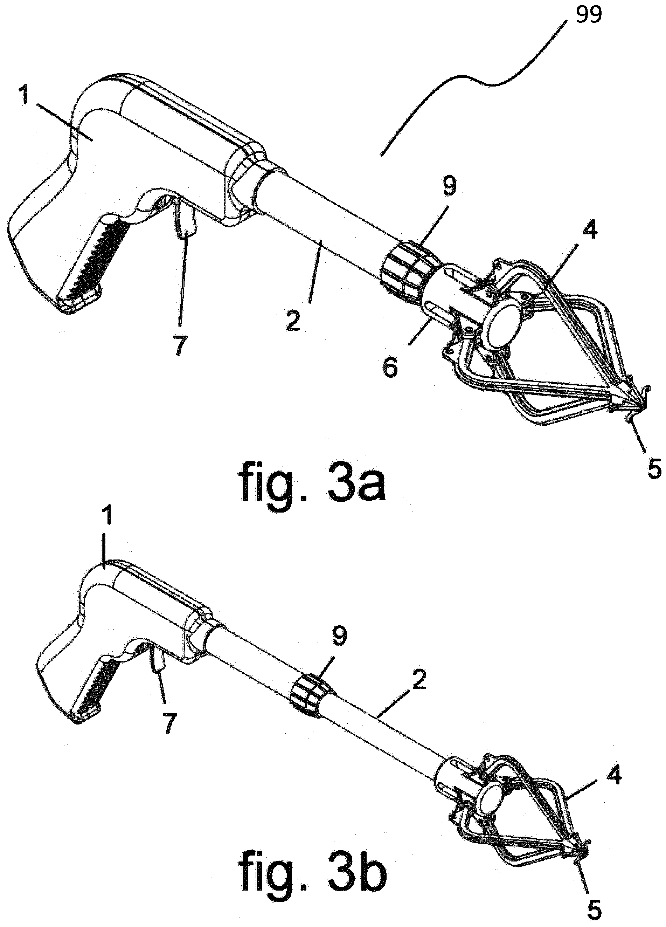

Figures 3A and 3B show isometric views of the embodiment of the device shown in Figure 1 with the picker in the second position and the elongate member in the first and second position respectively;

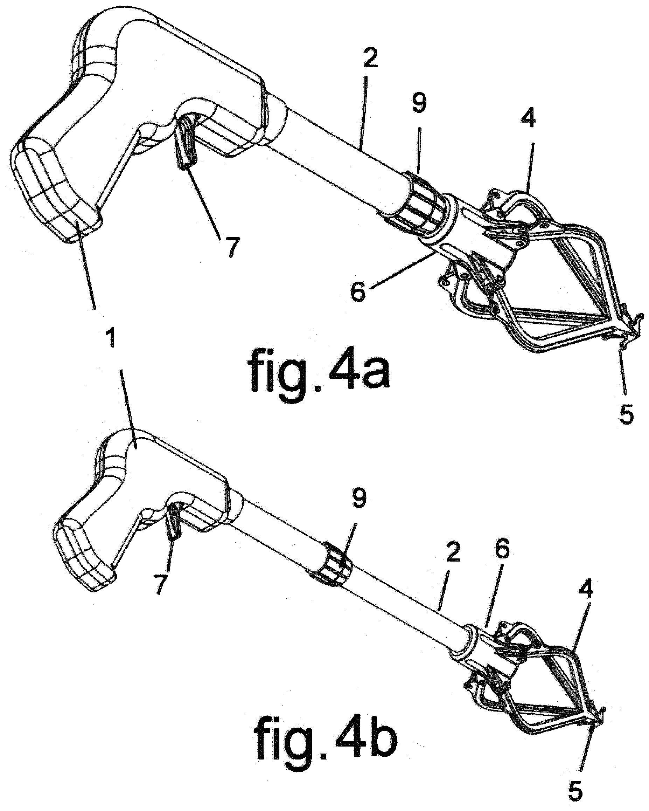

Figures 4A and 4B show reverse isometric views of the embodiment of the device shown in Figure 1 with the picker in the second position and the elongate member in the first and second position respectively;

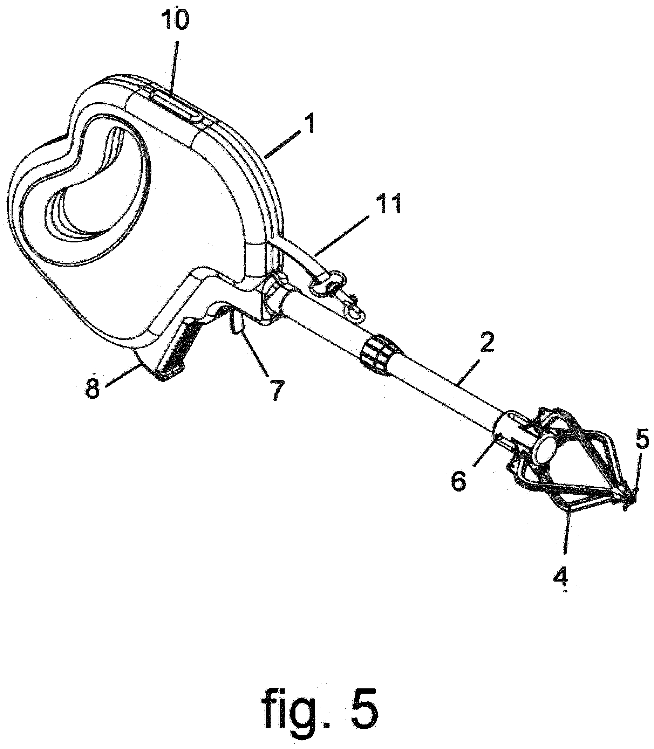

Figure 5 shows an isometric view of the apparatus shown in Figure 1 with the picker in the second position and the elongate member in the second position;

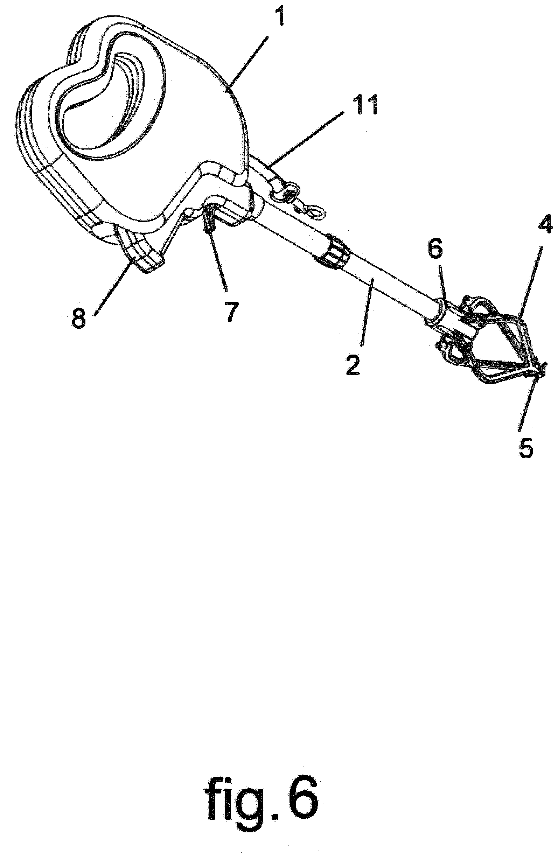

Figure 6 shows a reverse isometric view of the apparatus shown in Figure 1 with the picker in the second position and the elongate member in the second position;

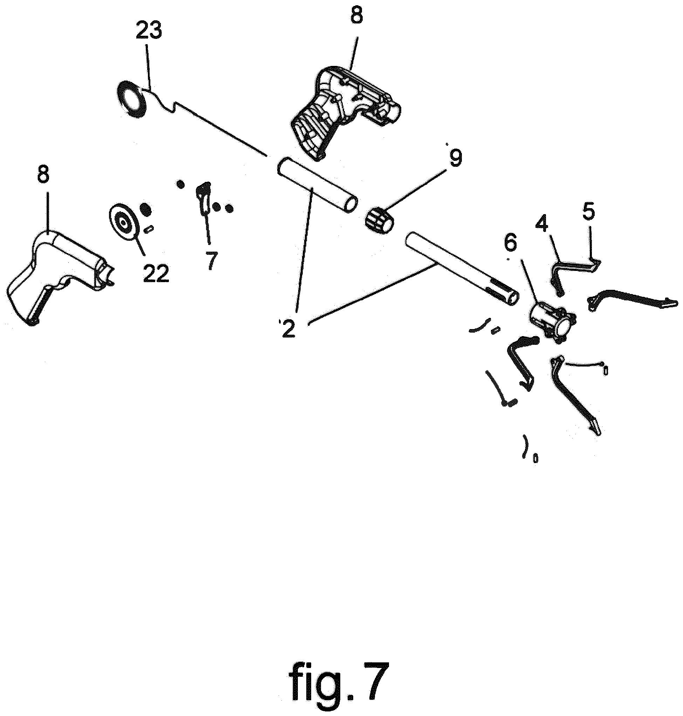

Figure 7 shows an exploded isometric view of the embodiment of the device shown in figure 1;

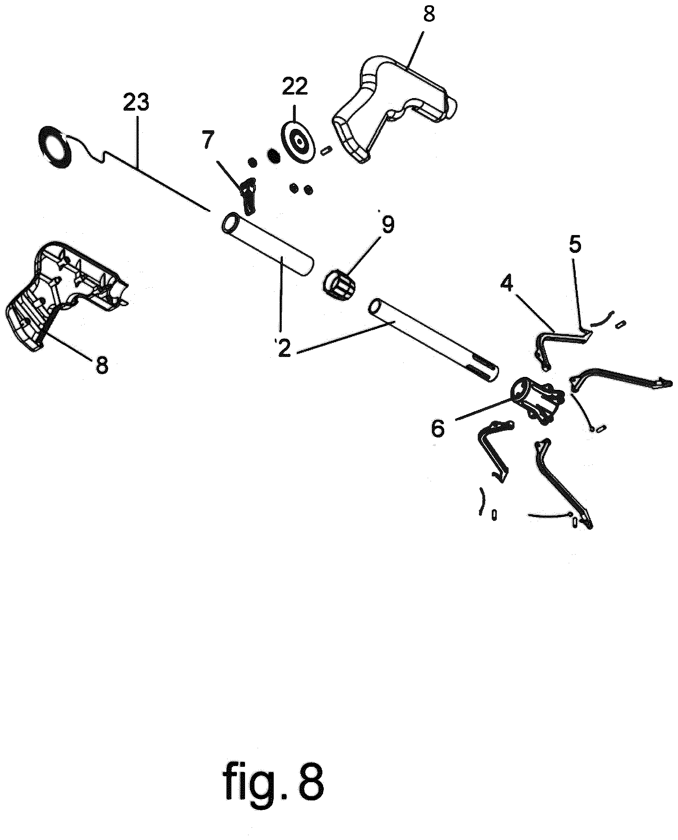

Figure 8 shows a reverse exploded isometric view of the embodiment of the device shown in Figure 1;

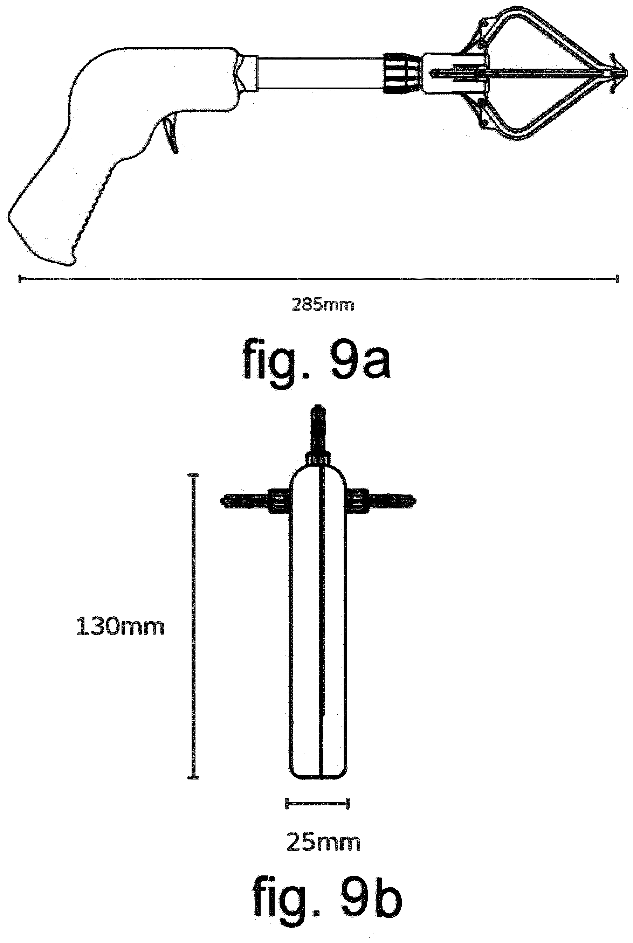

Figure 9A and 9B show a side view and an end view of the embodiment of the device shown in Figure 1 with the picker in the second position and elongate member in the first position;
Figure 10 shows an isometric view of the embodiment of the handle shown in the embodiment of the apparatus shown in Figure 1;
Figure 11 is a schematic perspective view of an example first member locking mechanism, according to examples;
Figure 12 is a schematic side view of the example first member locking mechanism, according to examples;
Figure 13 is a first schematic perspective view of an example second member locking mechanism, according to examples;
Figure 14 is a second schematic perspective view of the example second member locking mechanism, according to examples; and
Figure 15 is a schematic side cross-sectional view of the example second member locking mechanism, according to examples.

### DETAILED DESCRIPTION OF FIGURES

With reference to the figure there is shown an embodiment of a pet litter pickup device 199 generally comprising an elongate member 2 with a handgrip 8 at a first proximate end, and a picker 3 at the second distal end, the picker having three or more arms 4, the handgrip comprising a picking mechanism activated by the trigger 7 and the elongate member 2 is arranged to extend from a first retracted transport length to a second longer usage length, the picking mechanism arranged to control movement of arms 4 from a first open position to a second closed position, the arms defining an internal volume in the second position adapted for pet faeces, and the arms including catches 5 adapted to catch and hold a litter bag (not shown) within the internal volume in the first and second position

With the reference to the embodiment of the device shown in the figures, the embodiment comprises a moulded plastic handgrip for example formed in acrylonitrile butadiene styrene (ABS). In other examples, the handgrip may comprise another material such as metal, or other polymeric material.

The handgrip 8 is formed similar to a gun, with trigger 7 to a lower part and the elongate member 2 extends from such handgrip in front and above the trigger 7.

At the distal second end, the embodiment comprises the picker 3 which is formed of four splayed arms 4 in the first position, the arms having anchors for cords on an outer edge, which cords are connected to a plate traveling in a housing 6 at the second end of the member. For example, the first open position is a position in which the ends of the arms 4 are spread apart from one another, and the second closed position is a position in which the ends of the arms 4 are closer to one another. For example, an amount of pet faeces may be held within the internal volume of the arms in the second closed position.

In the examples of the Figures, the litter picker features catches 5 that comprise four hooks on the end of the arms to allow attachment of an elastic top bag to the picker

Internally, the handgrip includes a pulley reel 22 , which reel is controlled by the trigger 7 to reel in a ball chain 23, which chain passes through a member that is formed by two coaxially telescopic lengths of aluminium cylindrical tubes to a distal second end. In these examples, aluminium cylindrical tubes are described. However, examples are not limited to two tubes. In addition, examples are not limited to aluminium tubes. For example, the telescopic members may comprise two or more cylindrical tubes (or members of another shape) comprising other suitable materials (e.g., steel, plastic, other metal alloy, 3D printing material, and the like).

In some examples, the pulley reel 22 helps keep the ball chain in position and the trigger 7 pulls this chain down when compressed, opening the arms 4 to open the internal volume wherein the trigger 7 hooks on one of the balls on the ball chain 23 and pull the arms 4 open. For example, the ball chain connects to (either directly, or via other components such as the previously described plate and cords) the anchors on the outer edges of the arms 4. When the ball chain is pulled by the action of the trigger 7, the arms 4 are pulled by the anchors on their outer edges to open to the first open position. This is an example, and those skilled in the art will appreciate that other specific mechanisms may be implemented to cause the arms 4 to open when the ball chain is pulled. In these examples, the arms 4 may be biased towards the second closed position.

In other examples, the trigger 7 being compressed pulls the ball chain, causing the arms 4 to close the internal volume, wherein the trigger 7 hooks on one of the balls on the ball chain 23 to cause the arms 4 to close. In other words, the mechanism comprising the ball chain may be configured with the arms 4 to function in the opposite manner to that described above. For example, the arms 4 may comprise anchors on the inner edges of the arms 4 (in other words, the edges which face the internal volume defined by the arms 4). For example, the ball chain connects to (either directly, or via other components such as the previously described plate and cords) the anchors on the inner edges (not shown) of the arms 4. When the ball chain is pulled by the action of the trigger 7, the arms 4 are pulled by the anchors on their inner edges to close to the second closed position. This is an example, and those skilled in the art will appreciate that other specific mechanisms may be implemented to cause the arms 4 to close when the ball chain is pulled. In these examples, the arms 4 may be biased towards the first open position.

In some examples, the tubing (which may be aluminium tubing) has a twist friction locking collar 9 to allow for easy telescoping and retracting of the litter picker. For example, the twist friction locking collar 9 is used to secure a particular telescoped position of the telescopic members. In other examples, other member locking mechanisms may be used to secure a particular telescopic position.

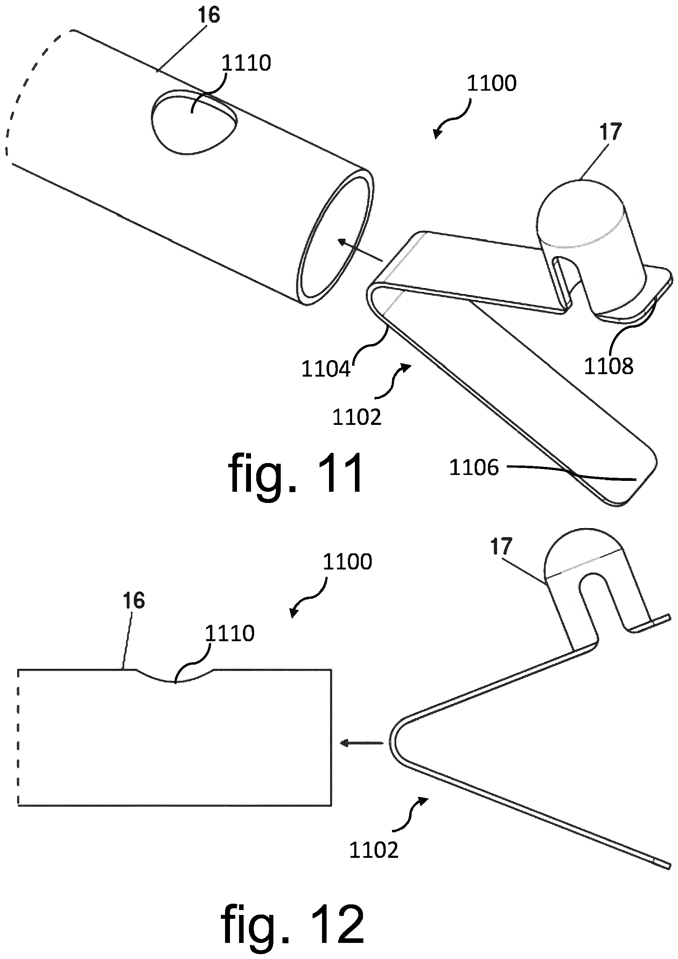

Figure 11 is a schematic perspective view of an example first member locking mechanism 1100 for locking together telescopic members at a particular telescoped position. Figure 12 is a schematic side view of the example first member locking mechanism 1100. For example, the first locking mechanism 1100 comprises a curved spring lock element 1102. The curved spring lock element 1102 comprises a spring-loaded pin 17 and a curved spring element 1104. The curved spring element 1104 comprises a fixing end, a pin end (towards which the spring-loaded pin 17 is provided) and a bend between these two ends. There is a spring force when these two ends are brought closer together, which spring force urges them apart. In these examples, the curved spring element 1104 may be fixed to a first one of the telescopic members (not shown) at the fixing end 1106 opposite to the pin end 1108. The first one if the telescopic members is hereafter referred to as the first telescopic member. For example, where the telescopic members are tubes, one tube inserting into the other, the fixing end 1106 may be fixed to the inner surface of the first telescopic member. In this case, the curved spring element 1104 extends across the inner diameter of the first telescopic member. For example, the first locking mechanism 1100 comprises an orifice 1110 provided on a second one 16 of the telescopic members (hereafter referred to as the second telescopic member 16). When the telescopic members are locked together using the locking mechanism 1100, the pin 17 is received into the orifice 1110. For example, the first telescopic member with the curved spring lock element 1102 may be inserted in the second telescopic member 16 comprising the orifice 1110. There may be provided one or more orifices located appropriately depending on the desired telescoped positions.

However, if the example first member locking mechanism 1100 of Figures 11 and 12 is placed between the handgrip 8 and the arms 4, the curved spring lock element 1102 may obstruct the ball chain which would pass from the handgrip 8 to the arms 4 within the tubular telescopic members. To address this, there may be provided a member locking mechanism to lock length extension, wherein the member locking mechanism is a spring-loaded pin mechanism configured on the telescopic members such that a centre region of the telescopic members is unoccupied by the member locking mechanism. Such an example second member locking mechanism described in the following may be deployed.

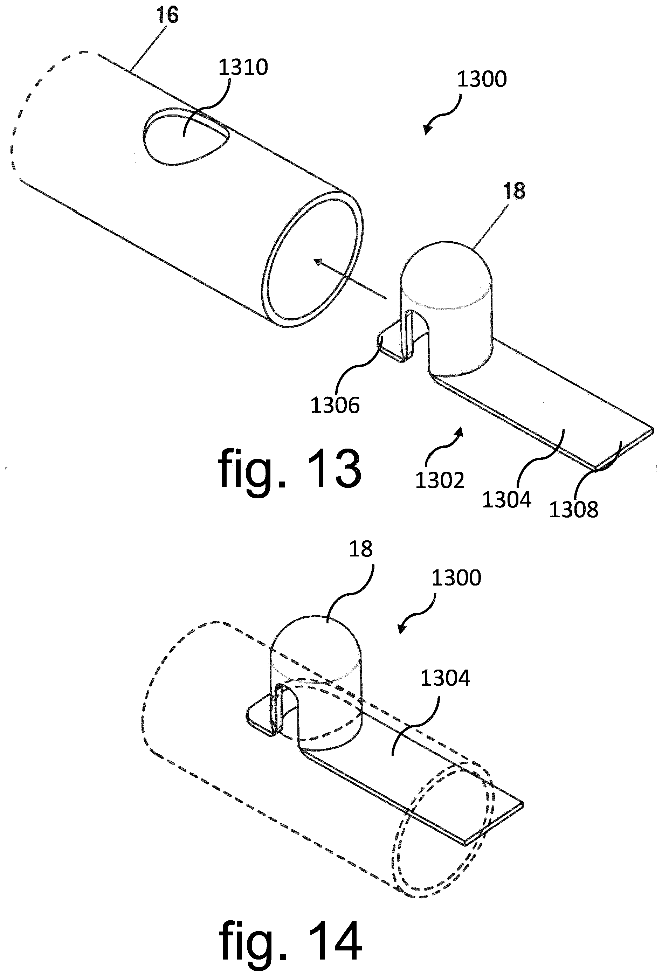

Figure 13 is a first schematic perspective view of the example second member locking mechanism 1300, according to examples, for locking together telescopic members at a particular telescoped position. Figure 14 is a second schematic perspective view of the example second member locking mechanism 1300. The second member locking mechanism 1300 comprises a flat spring lock element 1302. The flat spring lock element 1302 comprises a flat spring plate 1304. There is a spring-loaded pin 18 provided towards a pin end 1306 of the flat spring plate 1304. The flat spring plate 1304 is fixed towards a fixing end 1308 to the first telescopic member (no shown). The fixing end 1308 is opposite to the pin end 1306. The flat spring plate 1304 is fixed to the first telescopic member such that a centre region within the telescopic members is unoccupied by the flat spring lock element 1302. In these examples, the flat spring plate 1304 can deflect. For example, when a force is applied at the pin 18, the flat spring plate 1304 may flex, supported by its connection to the first telescopic member.

In these examples, the second member locking mechanism 1300 also comprises an orifice 1310 configured to receive the spring-loaded pin 18. The orifice 1310 is provided on the second telescopic member 16. For example, the orifice 1310 is provided at a location (and the spring lock element 1302 fixed to the first telescopic member at a location) according to the telescopic position desired to be locked. For example, there may be provided two or more orifices on the second telescopic member 16 according to the desired telescopic positions.

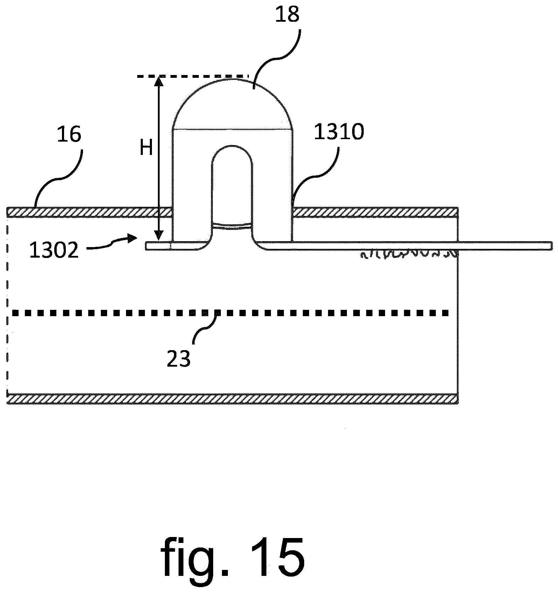

Figure 15 is a schematic side cross-sectional view of the example second member locking mechanism 1300, according to examples. In these examples, the pin 18 is shown received in the orifice 1310 of the second telescopic member 16. For example, the height H of the pin 18 may be chosen such that the flat spring lock element 1302 does not interfere with the ball chain (represented as dotted line 23) in the centre region of the telescopic members, even when the pin 18 is fully pushed down to disengage from the orifice 1310, for example. For example, the pin 18 may be pushed down, causing the flat spring plate 1304 to flex. For example, the flat spring plate 1304 is biased towards a flat configuration so that when the pushing force on the pin 18 is removed/reduced, the flat spring plate 1304 returns to the flat configuration. Advantageously, a convenient telescoping locking mechanism may be provided which functions together with the ball chain to provide a telescoping litter picker which can function to open/close the arms 4 at any telescoped position.

In some examples, the handgrip may screw together and may have bosses and bearings for keeping the pulleys in place and for ensuring low friction within the ball chain mechanism.

The internal recoil pulley 22 keeps the ball chain rolled up and under tension no matter the telescoped position.

The trigger 7 only engages with the chain when pulled on. This allows the chain to pass freely through it when telescoping the end out. For example, the trigger 7 comprises a structure which catches one of the balls on the ball chain when pulled, but does not catch any of the balls of the ball chain when not pulled.

The litter picker can be used in a retracted position and the picker remains compact, also when needed, the litter picker can be telescoped. The litter picker may be telescoped to one or more telescoped positions longer than the retracted position. In some examples, the picker is in naturally closed state (in other words, biased towards the second closed position), and pulling on the trigger opens the three or more (e.g., four) arms and releasing the trigger shuts them. In other examples, the picker is in naturally opened state (in other words, biased towards the first open position), and pulling on the trigger closes the arms 4 and releasing the trigger opens them. For example, the arms 4 may be arranged with springs and the like to bias them as desired.

As illustrative examples (to illustrate the nature of the mechanism) not forming part of the claimed invention, an elastic cord may be used. This would attach to the trigger and be stretched to tension when the telescopic tube is extended to ensure the arms do not automatically open , torsion springs may be used to keep them closed.

In some examples, the telescopic tubular member is a sourced aluminium tube that extends to a certain length so in that way the embodiment provides a compact telescopic litter picker that can either be integrated into or attached to a retractable dog leash and handle 100 as shown in the figures so as to allow for hands-free picking up of dog faeces.

The litter picker could be integrated into a retractable dog lead to create a single product or nay be connected to an existing dog lead handle in other embodiments. For example the device may comprise a connection means for a dog lead. Those skilled in the art will appreciate the various mechanism for attaching one component to another, for example, friction fit, screws, bolts, clipping mechanisms, strap mechanisms and the like.

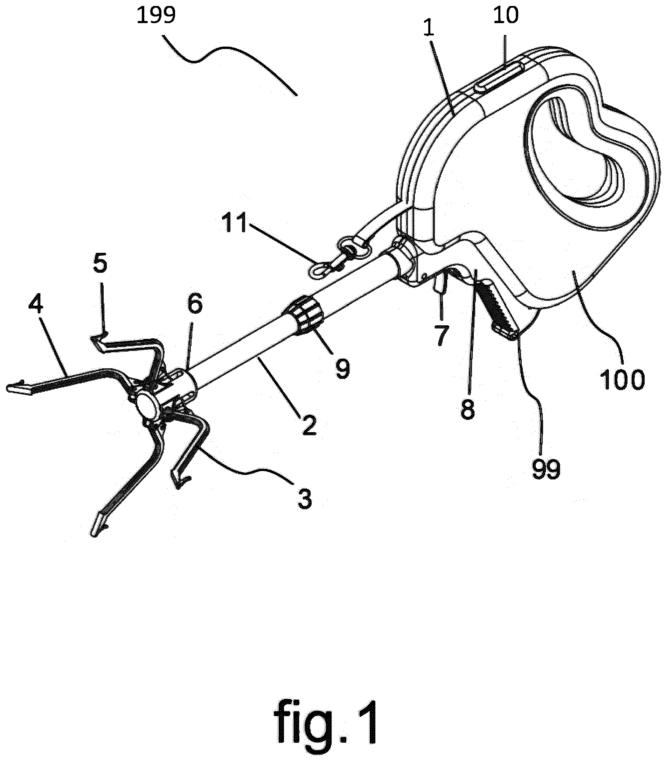

With reference to the embodiment shown in Figure 1 there is shown a handle 100 having a plastic (although the handle 100 may comprise other materials) body 1 and extendable dog lead 11 for the embodiment of the device 99 shown in the figures, so as to form the embodiment of the apparatus 199 according to the second aspect of the present invention.

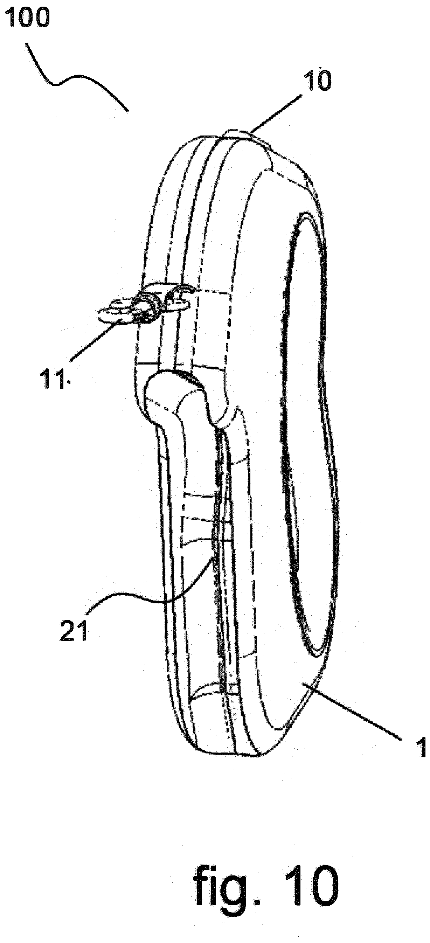

Moulded finger grips aid in the handle and could be over-moulded in rubber for a more tactile grip. With the reference of Figure 10 a dock 21 receives the device with a friction or tolerance fit

The following is a further description of certain examples.

In some examples there is provided a pet litter pickup device comprising an elongate member with a handgrip at a first proximate end, and a picker at the second distal end, the picker having three or more arms, the handgrip comprising a picking mechanism, and the elongate member is arranged to extend from a first retracted transport length to a second longer usage length, the picking mechanism arranged to control movement of arms from a first open position to a second closed position, the arms defining an internal volume in the second position adapted for receiving a pet faeces, and the arms including catches adapted to catch and hold a plastic bag within the internal volume in the first and second positions. The device may comprise four arms.

The catches may comprise reversed hooks.

The device may comprise catches located to the distal side of the arms from the internal volume.

The device may comprise a member locking collar to lock length extension.

The handgrip may comprise a trigger for the mechanism. The trigger may be configured to activate the picking mechanism.

In all embodiments, the mechanism comprises a ball chain.

The mechanism may, in non-claimed examples, comprise an elastic cord.

The mechanism may comprise a pulley.

The device may comprise a light source.

The device may comprise a bag holder.

In some example, there is provided an apparatus may comprise a pet litter pickup device and a handle comprising a lead, the apparatus comprising a connection mechanism for the device to the handle.

A handle for the apparatus may comprise a retractable lead.

The handle may comprise a lanyard attachment point.

The connection mechanism may comprise a dock on the handle.

The telescopic members may be arranged to extend from a first retracted transport length to a second usage length or a third usage length. The second usage length and the third usage length are longer than the first retracted transport length. The second usage length and the third usage length are different lengths. In other words, the telescopic members may be arranged in a retracted position, a partially extended position, or a fully extended position.

The picking mechanism is configured to function when the telescopic members are in any position. In other words, the picking mechanism is designed to function when the telescopic members are in any one of the first retracted transport length, the second usage length, or the third usage length. For example, the picker mechanism is configured to function whether the telescopic members are retracted, partially extended, or fully extended. In this way, the device may be used whether the telescopic members are retracted, partially extended, or fully extended.

Each arm may comprise a catch located at an end of the arm distal to the telescopic members. In other words, a catch may be formed at the end of one or more arms.

The picking mechanism is configured to control movement of the arms from a first open position to a second closed position. In the first open position the arms define an opening for enclosing or receiving a pet faeces. In the first open position, the distal ends of the arms, namely the ends of the arms with the reversed hooks, are apart from each other. In the second closed position the arms are arranged to capture and hold the pet faeces. In the second closed position, the arms are positioned such that the reversed hooks are brought together. The arms define an internal volume.

A litter bag may rest against the catches at the end of the arms and be kept in position during use. The litter bag may include an elastic top, such that the elastic top rests against the catches. The catches may be adapted to catch and hold the elastic top of the litter bag. The litter bag may line the internal volume when the arms are in the first open position and in the second closed position. The catches may be configured to hold the litter bag within the internal volume when the arms are moved between the first open position and the second closed position.

The catches may comprise hooks configured to prevent the litter bag from disengaging from the arms of the device.

In embodiments of the present invention, there is provided a pet litter pickup device comprising a hand grip at a first proximate end, a picker at a second end and telescopic members, the picker having three or more arms. The telescopic members are arranged to extend from a first retracted transport length to a second usage length and/or a third usage length longer than the second usage length. The hand grip comprises a picking mechanism, wherein: the picking mechanism is arranged to control movement of the arms; the picking mechanism is activated by a trigger; and the picking mechanism is designed to function by being arranged to control movement of the arms from a first open position to a second closed position in any position of the telescopic members such as at the first retracted transport length, the second usage length and/or the third usage length. The picking mechanism comprises a spring loaded pulley and a ball chain that is wrapped around the spring loaded pulley to keep the ball chain under tension no matter the telescoped position. The trigger is configured to pull the ball chain when pulled on to open the arms to the first open position, wherein the trigger is configured to only engage with the ball chain when pulled on, and to allow the chain to pass freely through when the trigger is not pulled. The arms define an internal volume in a closed position adapted for receiving a pet faeces, the arms include catches adapted to catch and hold a top elastic litter bag within the internal volume in the closed and open position.

In some examples of the embodiments, the device may comprise four arms. In some examples of the embodiments, the catches may comprise reversed hooks. In some examples of the embodiments, the device may comprise catches located to the distal side of the arms from the internal volume. In some examples of the embodiments the device may comprise a member locking collar or a member locking mechanism to lock a length extension of the telescopic members at the first retracted transport length, the second usage length, and/or the third usage length. In some examples of the embodiments, the device may comprise the member locking mechanism to lock length extension, wherein the member locking mechanism is a spring-loaded pin mechanism configured on the telescopic members such that a centre region of the telescopic members is unoccupied by the member locking mechanism. In some examples of the embodiments, the member locking mechanism may comprise: a flat spring lock element, the flat spring lock element comprising: a flat spring plate; and a spring-loaded pin provided towards a pin end of the flat spring plate, wherein: the flat spring plate is fixed towards a fixing end, opposite to the pin end, to a first one of the telescopic members such that a centre region within the telescopic members is unoccupied by the flat spring lock element; the member locking mechanism further comprises: an orifice, provided on a second one of the telescopic members, configured to receive the spring-loaded pin. In some examples of the embodiments, the hand grip may comprise a trigger for the mechanism. In some examples of the embodiments, the device may comprise a light source. In some examples of the embodiments, the device may comprise a bag holder. In some examples of the embodiments, the catches may be adapted to catch and hold an elastic top of the top elastic litter bag, which elastic top rests against the catches.

In some examples of the embodiments, there may be provided an apparatus comprising the described pet litter pickup device according to any embodiment, and a handle comprising a lead, the apparatus comprising a connection mechanism for connecting the device to the handle. In some examples of the embodiments, the handle may comprise a retractable lead. In some examples of the embodiments, the handle may comprise a lanyard attachment point. In some examples of the embodiments, the connection mechanism may comprise a dock on the handle.

The invention has been described by way of examples only and it will be appreciated that variation may be made to the above mentioned embodiments without departing from the scope of protection as defined by claims. The scope of protection is defined by the claims appended to this description.

## Claims

1. A pet litter pickup device (199) comprising:
a first proximate end and a hand grip (8) at the first proximate end,
a second distal end and a picker (3) at the second distal end, the picker having three or more arms (4); and
telescopic members, the telescopic members being arranged to extend from a first retracted transport length to a second usage length and/or a third usage length longer than the second usage length,
the hand grip (8) comprising a picking mechanism, wherein:
the picking mechanism is arranged to control movement of the three or more arms (4);
the picking mechanism is activated by a trigger (7); and
the picking mechanism is designed to function by being arranged to control movement of the three or more arms (4) from a first open position to a second closed position in any of the first retracted transport length, the second usage length and/or the third usage length of the telescopic members, wherein:
the picking mechanism comprises a spring loaded pulley and a ball chain that is wrapped around the spring loaded pulley to keep the ball chain under tension no matter the telescoped position; and
the trigger is configured to pull the ball chain when pulled on to open the three or more arms to the first open position, wherein the trigger is configured to only engage with the ball chain when pulled on, and to allow the chain to pass freely through when the trigger is not pulled,
the three or more arms (4) defining an internal volume in the second closed position adapted for receiving a pet faeces, and the three or more arms (4) including catches (5) adapted to catch and hold a top elastic litter bag within the internal volume in the second closed position and the first open position.

2. The pet litter pickup device (199) according to claim 1 comprising four arms (4).

3. The pet litter pickup device (199) according to claim 1 or 2 wherein the catches (5) comprise reversed hooks.

4. The pet litter pickup device (199) according to any preceding claim, wherein the catches (5) are located towards the distal side of the three or more arms (4) from the internal volume.

5. The pet litter pickup device (199) according to any preceding claim comprising a member locking collar (9) or a member locking mechanism (1100, 1300) configured to lock a length extension of the telescopic members at the first retracted transport length, the second usage length, and/or the third usage length.

6. The pet litter pickup device (199) according to claim 5 comprising the member locking mechanism (1300) configured to lock the length extension of the telescopic members, wherein the member locking mechanism is a spring-loaded pin mechanism configured on the telescopic members such that a centre region of the telescopic members is unoccupied by the member locking mechanism.

7. The pet litter pickup device (199) according to claim 6, wherein the member locking mechanism (1300) comprises:
a flat spring lock element (1302), the flat spring lock element (1302) comprising:
a flat spring plate (1304); and
a spring-loaded pin (18) provided towards a pin end (1306) of the flat spring plate (1304),
wherein:
the flat spring plate (1304) is fixed towards a fixing end (1308), opposite to the pin end (1306), to a first one of the telescopic members such that a centre region within the telescopic members is unoccupied by the flat spring lock element (1302); and
the member locking mechanism (1300) further comprises:
an orifice (1310), the orifice (1310) being provided on a second one of the telescopic members, the orifice (1310) being configured to receive the spring-loaded pin (18).

8. The pet litter pickup device (199) according to any preceding claim wherein the hand grip (8) comprises the trigger (7) for the picking mechanism.

9. The pet litter pickup device (199) according to any preceding claim comprising a light source.

10. The pet litter pickup device (199) according to any preceding claim comprising a bag holder.

11. The pet litter pickup device (199) according to any preceding claim, wherein the catches (5) are adapted to catch and hold an elastic top of the top elastic litter bag when the elastic top rests against the catches (5).

12. An apparatus (199) comprising the pet litter pickup device (99) according to any one of claims 1 to 11, and a handle (100) comprising a lead (11), the apparatus (199) further comprising a connection mechanism for connecting the pet litter pickup device (99) to the handle (100).

13. The apparatus (199) according to claim 12, wherein the handle (100) comprises a retractable lead.

14. The apparatus (199) according to claim 12 or 13, wherein the handle (100) comprises a lanyard attachment point.

15. The apparatus (199) according to any of claims 12 to 14, wherein the connection mechanism comprises a dock (21) on the handle (100).

## Patentansprüche

1. Haustierabfallaufnehmevorrichtung (199), umfassend:
ein erstes proximales Ende und einen Handgriff (8) an dem ersten proximalen Ende,
ein zweites distales Ende und einen Aufnehmer (3) an dem zweiten distalen Ende, wobei der Aufnehmer drei oder mehr Arme (4) aufweist, und
Teleskopglieder, wobei die Teleskopglieder so angeordnet sind, dass sie sich von einer ersten zurückgezogenen Transportlänge zu einer zweiten Nutzungslänge und/oder einer dritten Nutzungslänge, die länger als die zweite Nutzungslänge ist, erstrecken,
wobei der Handgriff (8) einen Aufnahmemechanismus umfasst, wobei:
der Aufnahmemechanismus zur Steuerung von Bewegung der drei oder mehr Arme (4) angeordnet ist,
der Aufnahmemechanismus durch einen Auslöser (7) aktiviert wird, und
der Aufnahmemechanismus so ausgelegt ist, dass er wirkt, indem er dazu angeordnet ist, eine Bewegung der drei oder mehr Arme (4) aus einer ersten offenen Position in eine zweite geschlossene Position in einer beliebigen der ersten zurückgezogenen Transportlänge, der zweiten Nutzungslänge und/oder der dritten Nutzungslänge der Teleskopglieder zu steuern, wobei:
der Aufnahmemechanismus eine federbelastete Riemenscheibe und eine Kugelkette umfasst, die um die federbelastete Riemenscheibe gewickelt ist, um die Kugelkette unabhängig von der teleskopierten Position unter Spannung zu halten, und
der Auslöser dazu ausgelegt ist, an der Kugelkette zu ziehen, wenn abgedrückt wird, um die drei oder mehr Arme zu der ersten offenen Position zu öffnen, wobei der Auslöser dazu ausgestaltet ist, die Kugelkette nur in Eingriff zu nehmen, wenn abgedrückt wird, und zu gestatten, dass die Kette frei hindurchgeht, wenn nicht abgedrückt wird,
wobei die drei oder mehr Arme (4) in der zweiten geschlossenen Position ein Innenvolumen definieren, das zur Aufnahme von Haustierfäzes ausgelegt ist, und die drei oder mehr Arme (4) Rasten (5) aufweisen, die dazu ausgelegt sind, in der zweiten geschlossenen Position und der ersten offenen Position einen oberen elastischen Abfallbeutel in dem Innenvolumen zu fassen und zu halten.

2. Haustierabfallaufnehmevorrichtung (199) nach Anspruch 1, umfassend vier Arme (4).

3. Haustierabfallaufnehmevorrichtung (199) nach Anspruch 1 oder 2, wobei die Rasten (5) umgekehrte Haken umfassen.

4. Haustierabfallaufnehmevorrichtung (199) nach einem der vorhergehenden Ansprüche, wobei die Rasten (5) von dem Innenvolumen zu der distalen Seite der drei oder mehr Arme (4) hin angeordnet sind.

5. Haustierabfallaufnehmevorrichtung (199) nach einem der vorhergehenden Ansprüche, umfassend einen Gliedverriegelungsbund (9) oder einen Gliedverriegelungsmechanismus (1100, 1300), der dazu ausgestaltet ist, eine Längenverlängerung der Teleskopglieder bei der ersten zurückgezogenen Transportlänge, der zweiten Nutzungslänge und/oder der dritten Nutzungslänge zu verriegeln.

6. Haustierabfallaufnehmevorrichtung (199) nach Anspruch 5, umfassend den Gliedverriegelungsmechanismus (1300), der zur Verriegelung der Längenverlängerung der Teleskopglieder ausgelegt ist, wobei der Gliedverriegelungsmechanismus ein federbelasteter Stiftmechanismus ist, der so an den Teleskopgliedern ausgestaltet ist, dass ein Mittelbereich der Teleskopglieder nicht von dem Gliedverriegelungsmechanismus eingenommen ist.

7. Haustierabfallaufnehmevorrichtung (199) nach Anspruch 6, wobei der Gliedverriegelungsmechanismus (1300) Folgendes umfasst:
ein Flachfederverriegelungselement (1302), wobei das Flachfederverriegelungselement (1302) Folgendes umfasst:
eine Flachfederplatte (1304) und
einen federbelasteten Stift (18), der zu einem Stiftende (1306) der Flachfederplatte (1304) hin vorgesehen ist, wobei:
die Flachfederplatte (1304) zu einem dem Stiftende (1306) gegenüberliegenden Befestigungsende (1308) hin an einem ersten der Teleskopglieder derart befestigt ist, dass ein Mittelbereich innerhalb der Teleskopglieder nicht von dem Flachfeder-Verriegelungselement (1302) eingenommen ist, und
der Gliedverriegelungsmechanismus (1300) ferner Folgendes umfasst:
eine Öffnung (1310), wobei die Öffnung (1310) an einem zweiten der Teleskopglieder vorgesehen ist, wobei die Öffnung (1310) zur Aufnahme des federbelasteten Stifts (18) ausgestaltet ist.

8. Haustierabfallaufnehmevorrichtung (199) nach einem der vorhergehenden Ansprüche, wobei der Handgriff (8) den Auslöser (7) für den Aufnahmemechanismus umfasst.

9. Haustierabfallaufnehmevorrichtung (199) nach einem der vorhergehenden Ansprüche, umfassend eine Lichtquelle.

10. Haustierabfallaufnehmevorrichtung (199) nach einem der vorhergehenden Ansprüche, umfassend einen Beutelhalter.

11. Haustierabfallaufnehmevorrichtung (199) nach einem der vorhergehenden Ansprüche, wobei die Rasten (5) dazu ausgelegt sind, eine elastische Oberseite des oberen elastischen Abfallbeutels zu fassen und zu halten, wenn die elastische Oberseite an den Rasten (5) anliegt.

12. Vorrichtung (199), umfassend die Haustierabfallaufnehmevorrichtung (99) nach einem der Ansprüche 1 bis 11 und einen Handgriff (100), der eine Leine (11) umfasst, wobei die Vorrichtung (199) ferner einen Verbindungsmechanismus zum Verbinden der Haustierabfallaufnehmevorrichtung (99) mit dem Handgriff (100) umfasst.

13. Vorrichtung (199) nach Anspruch 12, wobei der Handgriff (100) eine zurückziehbare Leine umfasst.

14. Vorrichtung (199) nach Anspruch 12 oder 13, wobei der Handgriff (100) einen Abzugsleinenbefestigungspunkt umfasst.

15. Vorrichtung (199) nach einem der Ansprüche 12 bis 14, wobei der Verbindungsmechanismus ein Dock (21) an dem Handgriff (100) umfasst.

## Revendications

1. Dispositif de ramassage de litière pour animaux domestiques (199) comprenant :
une première extrémité proximale et une poignée (8) au niveau de la première extrémité proximale,
une seconde extrémité distale et un élément de préhension (3) au niveau de la seconde extrémité distale, l'élément de préhension comportant au moins trois bras (4) ; et
des éléments télescopiques, les éléments télescopiques étant conçus pour s'étendre d'une première longueur de transport rétractée à une deuxième longueur d'utilisation et/ou une troisième longueur d'utilisation plus longue que la deuxième longueur d'utilisation,
la poignée (8) comprenant un mécanisme de ramassage,
le mécanisme de ramassage étant conçu pour commander le mouvement des au moins trois bras (4) ;
le mécanisme de ramassage étant activé par une gâchette (7) ; et
le mécanisme de ramassage étant conçu pour fonctionner en étant disposé pour commander le mouvement des au moins trois bras (4) d'une première position ouverte à une seconde position fermée dans n'importe quelle longueur parmi la première longueur de transport rétractée, la deuxième longueur d'utilisation et/ou la troisième longueur d'utilisation des éléments télescopiques,
le mécanisme de ramassage comprenant une poulie à ressort et une chaînette à boules enroulée autour de la poulie à ressort pour maintenir la chaînette à boules sous tension quelle que soit la position télescopique ; et
la gâchette étant conçue pour tirer la chaînette à boules lorsqu'elle est actionnée pour ouvrir les au moins trois bras dans la première position d'ouverture, la gâchette étant conçue pour ne venir en prise avec la chaînette à boules que lorsqu'elle est actionnée et pour permettre à la chaînette de passer librement au travers lorsque la gâchette n'est pas actionnée,
les au moins trois bras (4) définissant un volume interne dans la seconde position fermée, conçu pour recevoir les fèces d'un animal domestique, et les au moins trois bras (4) comprenant des attaches (5) conçues pour attraper et maintenir un sac à litière élastique supérieur dans le volume interne dans la seconde position fermée et la première position ouverte.

2. Dispositif de ramassage de litière pour animaux domestiques (199) selon la revendication 1 comprenant quatre bras (4).

3. Dispositif de ramassage de litière pour animaux domestiques (199) selon la revendication 1 ou 2, les attaches (5) comprenant des crochets inversés.

4. Dispositif de ramassage de litière pour animaux domestiques (199) selon l'une quelconque des revendications précédentes, les attaches (5) étant situées vers le côté distal des au moins trois bras (4) par rapport au volume interne.

5. Dispositif de ramassage de litière pour animaux domestiques (199) selon l'une quelconque des revendications précédentes comprenant un collier de verrouillage d'élément (9) ou un mécanisme de verrouillage d'élément (1100, 1300) conçu pour verrouiller une extension de longueur des éléments télescopiques au niveau de la première longueur de transport rétractée, de la deuxième longueur d'utilisation, et/ou de la troisième longueur d'utilisation.

6. Dispositif de ramassage de litière pour animaux domestiques (199) selon la revendication 5 comprenant le mécanisme de verrouillage d'élément (1300) conçu pour verrouiller l'extension de longueur des éléments télescopiques, le mécanisme de verrouillage d'élément étant un mécanisme à goupille à ressort situé sur les éléments télescopiques de sorte qu'une région centrale des éléments télescopiques soit inoccupée par le mécanisme de verrouillage d'élément.

7. Dispositif de ramassage de litière pour animaux domestiques (199) selon la revendication 6, le mécanisme de verrouillage d'élément (1300) comprenant :
un élément de verrouillage à ressort plat (1302), l'élément de verrouillage à ressort plat (1302) comprenant :
une plaque à ressort plat (1304) ; et
une goupille à ressort (18) située vers une extrémité de goupille (1306) de la plaque à ressort plat (1304),
la plaque à ressort plat (1304) étant fixée vers une extrémité de fixation (1308), opposée à l'extrémité de goupille (1306), à un premier des éléments télescopiques de sorte qu'une région centrale à l'intérieur des éléments télescopiques soit inoccupée par l'élément de verrouillage à ressort plat (1302) ; et
le mécanisme de verrouillage d'élément (1300) comprenant en outre :
un orifice (1310), l'orifice (1310) étant situé sur un second des éléments télescopiques, l'orifice (1310) étant conçu pour recevoir la goupille à ressort (18).

8. Dispositif de ramassage de litière pour animaux domestiques (199) selon l'une quelconque des revendications précédentes, la poignée (8) comprenant la gâchette (7) pour le mécanisme de ramassage.

9. Dispositif de ramassage de litière pour animaux domestiques (199) selon l'une quelconque des revendications précédentes, comprenant une source de lumière.

10. Dispositif de ramassage de litière pour animaux domestiques (199) selon l'une quelconque des revendications précédentes, comprenant un support de sac.

11. Dispositif de ramassage de litière pour animaux domestiques (199) selon l'une quelconque des revendications précédentes, les attaches (5) étant conçues pour attraper et maintenir un sommet élastique du sac à litière élastique supérieur lorsque le sommet élastique repose contre les attaches (5).

12. Appareil (199) comprenant le dispositif de ramassage de litière pour animaux domestiques (99) selon l'une quelconque des revendications 1 à 11, et une poignée (100) comprenant une laisse (11), l'appareil (199) comprenant en outre un mécanisme de liaison pour relier le dispositif de ramassage de litière pour animaux domestiques (99) à la poignée (100).

13. Appareil (199) selon la revendication 12, la poignée (100) comprenant une laisse rétractable.

14. Appareil (199) selon la revendication 12 ou 13, la poignée (100) comprenant un point d'attache à cordon.

15. Appareil (199) selon l'une quelconque des revendications 12 à 14, le mécanisme de liaison comprenant un socle d'accueil (21) sur la poignée (100).
